# EUROPÄISCHE PATENTSCHRIFT

(11) **EP 1 974 967 B1**
(45) Veröffentlichungstag und Bekanntmachung des Hinweises auf die Patenterteilung: **07.09.2016**
(21) Anmeldenummer: 08004895.2
(22) Anmeldetag: 15.03.2008
(51) Int. Cl.: B60J 7/00, B60J 7/12

(54) **Cabriolet-Fahrzeug mit einem aufragenden Säulenteil des Daches**
Convertible vehicle with a roof with an upright column part
Véhicule décapotable doté d'une partie de colonne du toit saillante

(30) Priorität: 29.03.2007 DE 102007015041
(43) Veröffentlichungstag der Anmeldung: 01.10.2008
(73) Patentinhaber: Valmet Automotive Oy, 23500 Uusikaupunki (FI)
(72) Erfinder: Westermann, Manfred, 49080 Osnabrück (DE)
(74) Vertreter: Kronthaler, Schmidt & Coll.

(56) Entgegenhaltungen:
- EP-A2- 0 352 428
- DE-A1- 10 317 416
- DE-C1- 3 724 533

## Beschreibung

Die Erfindung betrifft ein ablegbares Dach eines Cabriolet-Fahrzeugs, das an jeder Fahrzeugseite einen im geschlossenen Zustand gegen eine Seitenscheibe dichtenden und vom Bereich einer Fensterbrüstungslinie aufragenden Säulenteil umfasst, der zumindest über einen Teil der Dachöffnungsbewegung bereichsweise in Fahrzeugquerrichtung einwärts verlagerbar ist, nach dem Oberbegriff des Anspruchs 1.

Es ist bekannt, einen aufragenden Hauptsäulenteil, an dem der Bezugsstoff eines Softtops gehalten ist und der mit einer über seinen Verlauf erstreckten Dichtungslinie zur Abdichtung gegenüber Seitenscheiben versehen ist, über einen schräg im Fahrzeug liegenden Zugkörper, der einenends dem Hauptsäulenteil und anderenends der Fahrzeugkarosserie zugeordnet ist, während der Dachöffnungsbewegung an seinem unteren Ende quer einwärts zu ziehen. Der Zugkörper ist dabei als Koppelstange ausgebildet und einenends auf einem Kugelkopf auf dem Hauptsäulenteil sowie anderenends auf einem dem karosserieseitigen Hauptlager zugeordneten Kugelkopf jeweils gelenkig gelagert. Die Quereinwärtsverlagerung dient dazu, einerseits bei geschlossenem Zustand des Daches einen innigen Kontakt des Säulenteils mit einer Dichtung an der Fensterbrüstungslinie und an den Seitenscheiben sicherzustellen und andererseits die Dachbewegung ohne verschleißenden Kontakt des Säulenteils zu diesen Dichtungen oder anderen Teilen der Fensterbrüstungslinie zu ermöglichen.

Da das Dach bzgl. seiner Lage zur Karosserie Fertigungstoleranzen aufweist, wird in der Produktion ein Sortiment von verschieden langen Koppelstangen bereitgestellt, aus denen der montierende Arbeiter je nach Relativlage des Daches die passende heraussucht. Dieses Verfahren ist zeitaufwendig und bedingt einen erhöhten logistischen Aufwand. Eine Längeneinstellbarkeit der Zugstangen würde zwar die Zahl der bereitzustellenden Bauteile verringern, jedoch wäre eine solche Einstellung in der laufenden Produktion noch zeitaufwendiger. In jedem Fall ist eine aufwendige Ausrichtung von quer beweglichem Säulenteil und Karosserie erforderlich.

Aus der DE 37 24 533 C1 ist ein Klappverdeck eines Kraftwagens mit einer in Fahrzeugquerrichtung einklappbaren Dachhauthalteschiene bekannt. Die Dachhauthalteschiene ist hierzu über einen Spreizhebel mit einer Verdecksäule gelagert und wird bei einer Verdeckbewegung gegenüber dieser eingeklappt.

Der Erfindung liegt das Problem zugrunde, hier eine Verbesserung zu erreichen.

Die Erfindung löst dieses Problem durch ein ablegbares Dach mit den Merkmalen des Anspruchs 1 sowie durch ein Cabriolet-Fahrzeug mit den Merkmalen des Anspruchs 10. Vorteilhafte Ausgestaltungen und Weiterbildungen der Erfindung sind in den weiteren Ansprüchen 2 bis 9 angegeben.

Mit dem erfindungsgemäßen Dach ist durch die mitbewegliche räumliche Gelenkanordnung eine Möglichkeit geschaffen, eine von einer in gleichbleibender Fahrzeuglängsebene laufenden Dachöffnungs- oder -schließbeweung getriebene Querverlagerung des Säulenteils zu erreichen.

Eine mechanisch einfache und zuverlässig verkantungsfreie Überlagerung der Bewegungen in der gleichbleibenden Fahrzeuglängsebene und der überlagerten Querbewegung ist dadurch ermöglicht, dass die räumliche Gelenkanordnung ein sphärisches Gelenk ist, dessen sämtliche Achsen sich in genau einem Schnittpunkt schneiden.

Dieser Schnittpunkt der Achsen der räumlichen Gelenkanordnung liegt für eine mechanisch bestimmte Bewegung möglichst genau auf einer der Gelenkachsen des ersten, in der gleichbleibenden Fahrzeuglängsebene gelegenen Mehrgelenks.

Der Schnittpunkt der räumlichen Gelenkanordnung ist auf einer oberen Gelenkachse des Mehrgelenks gelegen, wodurch ein großer Verlagerungsweg eines Gelenks für die Übersetzung in die Querbewegung nutzbar ist.

Dabei ist es für die Einstellung eines nur geringen Querverlagerungswegs von typisch weniger als fünf Zentimetern vorteilhaft, dass die räumliche Gelenkanordnung eine erste Achse umfasst, die gegenüber der oberen Gelenkachse des Mehrgelenks, auf der der Schnittpunkt der Achsen liegt, mit nur einer geringen Abwinklung verläuft.

Eine zusätzliche Definition der Bewegung ist besonders günstig und toleranzunempfindlich dadurch erreicht, dass durch den Schnittpunkt eine zweite und eine dritte Achse der räumlichen Gelenkanordnung laufen, die im wesentlichen dem Verlauf des Säulenteils folgen und über einen vergleichsweise langen Weg zu einem unteren Scharnier führen, das einen in Querrichtung nicht beweglichen Teil der Hauptsäule mit dem quer einwärts beweglichen Säulenteil verbindet. Der lange Weg stabilisiert die Anordnung insgesamt und macht sie auch gegen äußere Störungen, wie etwa Zug durch einen Dachbezug oder Verwindungen, unempfindlich.

In der Ausbildung nach Anspruch 2 ist die Querverlagerung des Säulenteils ohne reibenden Kontakt irgendwelcher Führungsteile möglich. Quietschgeräusche - etwa an einem Kugelkopf - oder Oberflächeabtrag - etwa an einer Führungsfläche - sind dadurch vermeidbar. Insbesondere ist auch eine Ausrichtung des so verlagerbaren Säulenteils zu irgendwelchen karosserieseitigen Führungsteilen entbehrlich, was die Montage des Daches erheblich beschleunigt und vereinfacht.

Insbesondere läuft über die mitbewegte räumliche Gelenkanordnung die Querbewegung des Säulenteils zwangsweise ab. Dann ist diese auch ohne weitere Steuerungs- oder Antriebsmaßnahmen für die räumliche Gelenkanordnung zu erreichen.

Für die heckwärts und abwärts gerichteten Komponenten der Öffnungsbewegung des Daches bildet in einfacher Ausbildung das erste Mehrgelenk ein Viergelenk mit zwei oberen, bei geschlossenem Dach im Übergangsbereich zwischen einem schräg abwärts verlaufenden, ein Heckfenster umfassenden hinteren Dachteil und einem nahezu horizontal über einem Insassenraum liegenden vorgeordneten Dachteil und mit zwei unteren Gelenken im Bereich einer Fensterbrüstungslinie aus. Damit können zwei Lenker nach Art eines Gelenkparallelogramms, wobei keine exakte Parallelität dieser Lenker vorliegen muss, die oberen und unteren Gelenke verbinden.

Insgesamt kann so aus dem Mehrgelenk mit zueinander parallelen Gelenkachsen und aus der räumlichen Gelenkanordnung mit einander schneidenden Achsen insgesamt ein Siebengelenk ausgebildet werden, das eine konstruktiv einfache und zuverlässige Gesamtkonstruktion ausbildet.

Wenn die Abwinklung weniger als 3° beträgt, kann auch ein großer Schwenkweg des ersten Mehrgelenks in eine hinreichend kleine Querverlagerung übersetzt werden.

Für eine im Dauerbetrieb zuverlässige Lage der ersten Achse der räumlichen Gelenkanordnung und derjenigen oberen Gelenkachse des Mehrgelenks, auf der der Schnittpunkt der Achsen liegt, ist es sehr günstig, wenn diese beiden Achsen bereichsweise gemeinsam von einem in sich abgewinkelten Verbindungsbolzen umfasst sind. Dieses starre Bauteil stellt in seiner definierten Einbaustellung sicher, dass diese Winkelbeziehung sich auch über viele Bewegungszyklen sich nicht ändern kann.

Sofern der abgewinkelte Verbindungsbolzen eine erste umlaufende Außenfläche als Schwenklager für einen in Fahrzeugquerrichtung nicht verlagerbaren Lenker des Mehrgelenks und eine hierzu abgewinkelt stehende zweite Außenfläche als Schwenklager für den quer einwärts verlagerbaren Säulenteil umfasst und durch die Schwenkbewegung des Lenkers des Mehrgelenks in einer Fahrzeuglängsebene automatisch die Querverlagerung des Säulenteils bewirkbar ist, ist nicht nur die korrekte Lage der Achsen dauerhaft sichergestellt, sondern auch die Bewegungsmöglichkeit des quer verlagerbaren Säulenteil zum nur in Fahrzeuglängsrichtung beweglichen Lenker dauerhaft definiert. Irgendwelche zusätzlichen Ausrichtungs- oder Nachstellarbeiten zwischen dem in Fahrzeuglängsrichtung beweglichen ersten Mehrgelenk und der räumlichen Gelenkanordnung sind vollständig entbehrlich.

Durch das Zusammenlaufen seiner Achsen zu dem gemeinsamen Schnittpunkt umfasst das Scharnier zwangsläufig zwei zueinander nicht parallele Achsen, die Teil des räumlichen Gelenks sind.

Erfindungsgemäß kann ein Fahrzeugdach mit der Querverlagerung des Säulenteils unabhängig von der Karosserie fertig montiert, ausgerichtet und auf Funktion getestet werden, so dass schon das so ausgebildete Fahrzeugdach an sich als Schutzgegenstand beansprucht wird.

Weitere Vorteile und Merkmale der Erfindung ergeben sich aus einem in der Zeichnung schematisch dargestellten und nachfolgend beschriebenen Ausführungsbeispiel des Gegenstandes der Erfindung.

In der Zeichnung zeigt:
- Fig. 1: eine grob schematische, perspektivische und nach vorne abgebrochene Ansicht des hinteren und bzgl. der Fahrtrichtung linken Fahrzeugbereichs eines erfindungsgemäßen Cabriolet-Fahrzeugs bei geschlossenem Dach, von dem hier nur das Dachgestänge teilweise und ohne übergreifenden Bezug dargestellt ist,
- Fig. 2: eine Ansicht von schräg hinten auf den herausgezeichneten Säulenteil und seine Lage zur Fensterbrüstung und seine Verbindung zu einem oberen Eckspriegel des Daches sowie mit zusätzlich eingezeichnetem Anschlag zur Begrenzung der Bewegbarkeit durch die Bezugspannung bei geschlossenem Dach,
- Fig. 3: eine Ansicht von schräg hinten auf den herausgezeichneten Säulenteil in der geschlossenen Dachstellung nach Fig. 2, jedoch ohne den Anschlag, aber mit zusätzlich eingezeichneten Drehachsen der Mehrgelenkanordnung,

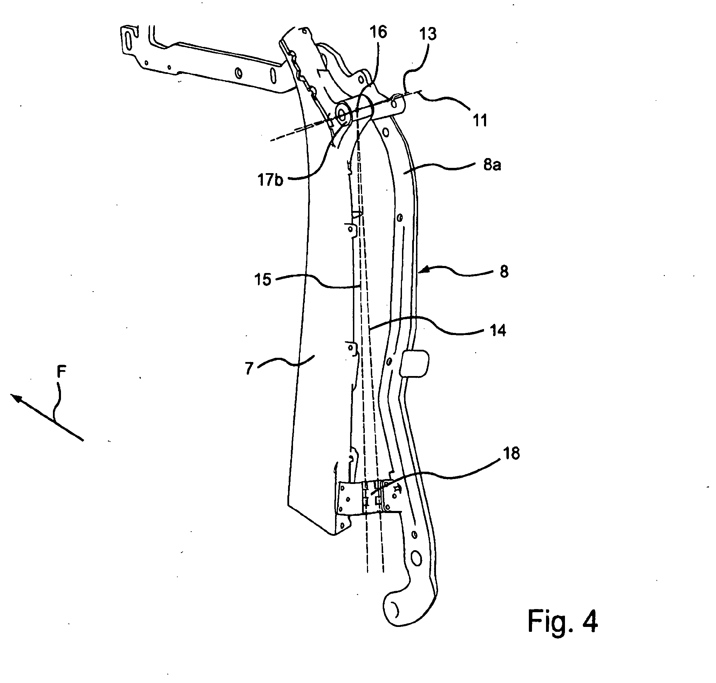

- Fig. 4: eine ähnliche Ansicht wie Fig. 3 bei gerade beginnender Dachöffnung,

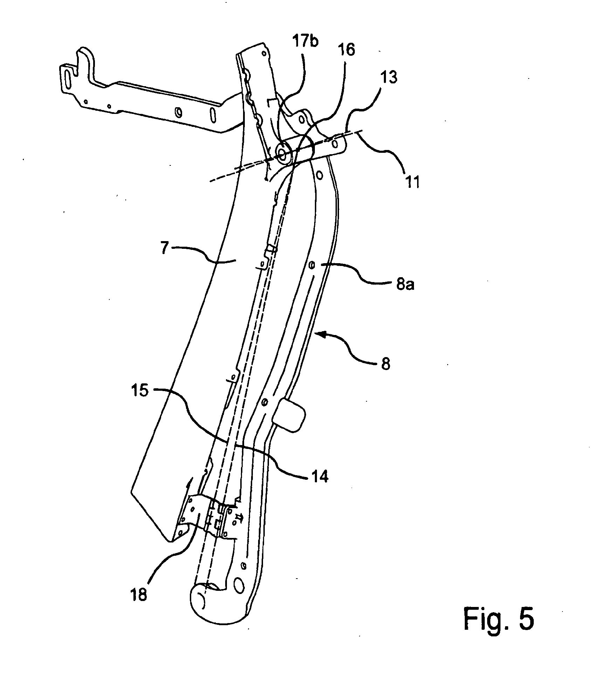

- Fig. 5: eine ähnliche Ansicht wie Fig. 4 bei weiter fortschreitender Dachöffnung mit nach hinten schwenkendem und bereichsweise quer einwärts verlagerbarem Säulenteil,

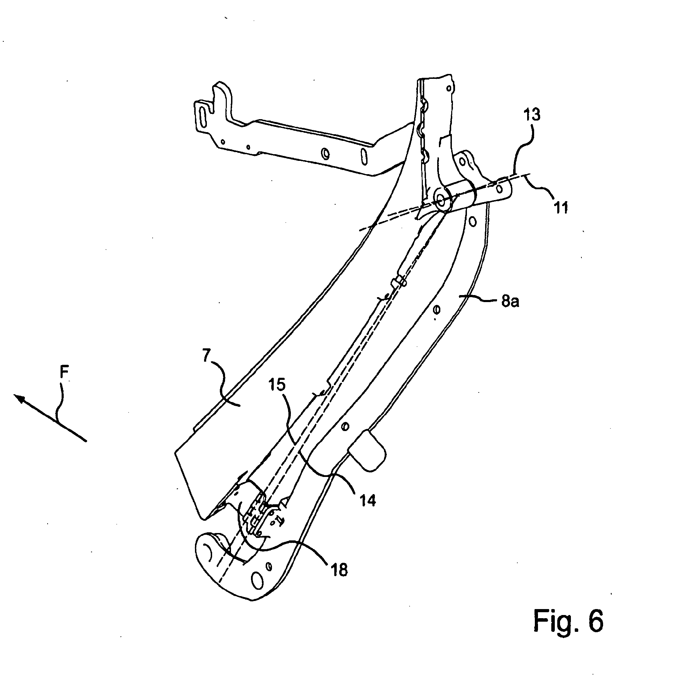

- Fig. 6: eine ähnliche Ansicht wie Fig. 5 bei weiter fortschreitender Dachöffnung,

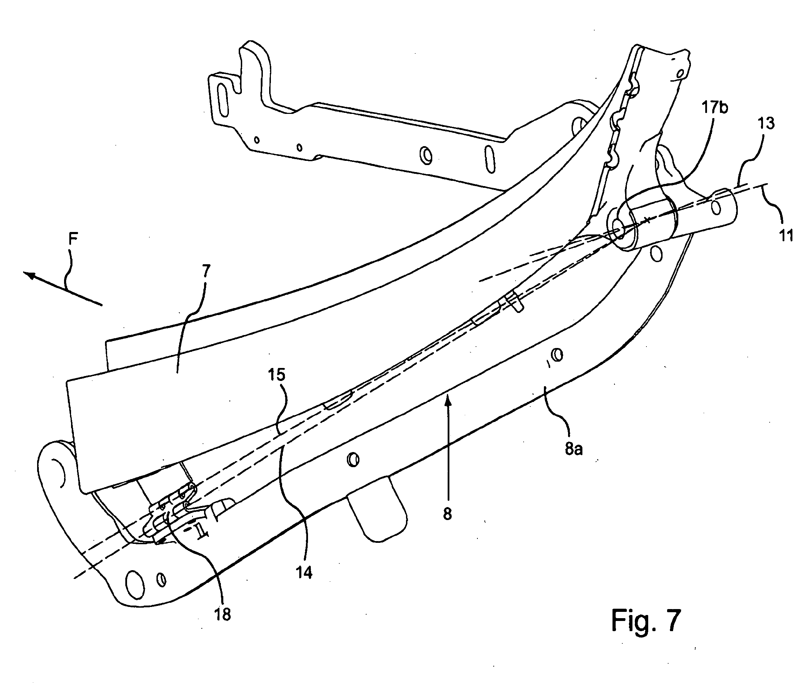

- Fig. 7: eine ähnliche Ansicht wie Fig. 6 bei weiter fortschreitender Dachöffnung,

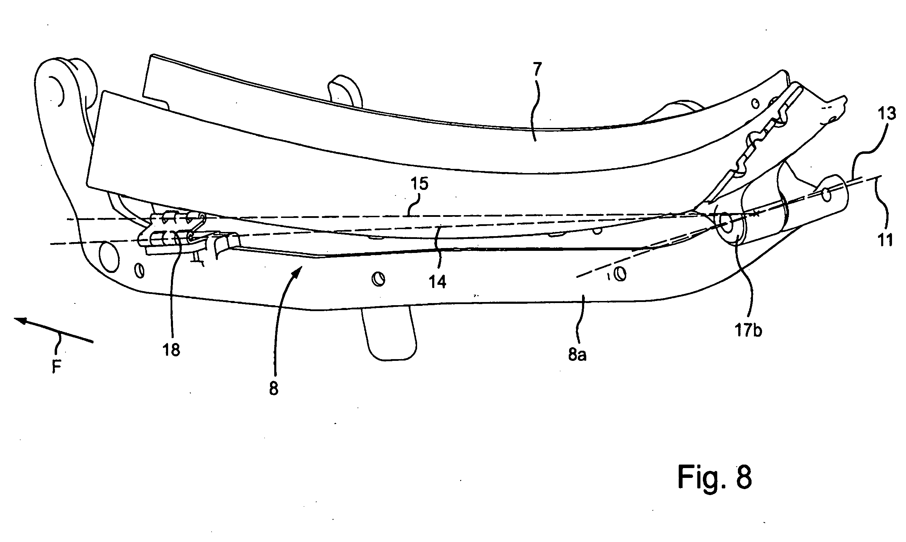

- Fig. 8: eine ähnliche Ansicht wie Fig. 7 bei vollständig abgelegtem Dach,
- Fig. 9: eine Ansicht von hinten auf die herausgezeichnete Hauptsäule in geschlossener Dachstellung, entsprechend der geschlossenen Dachstellung nach Fig. 3,

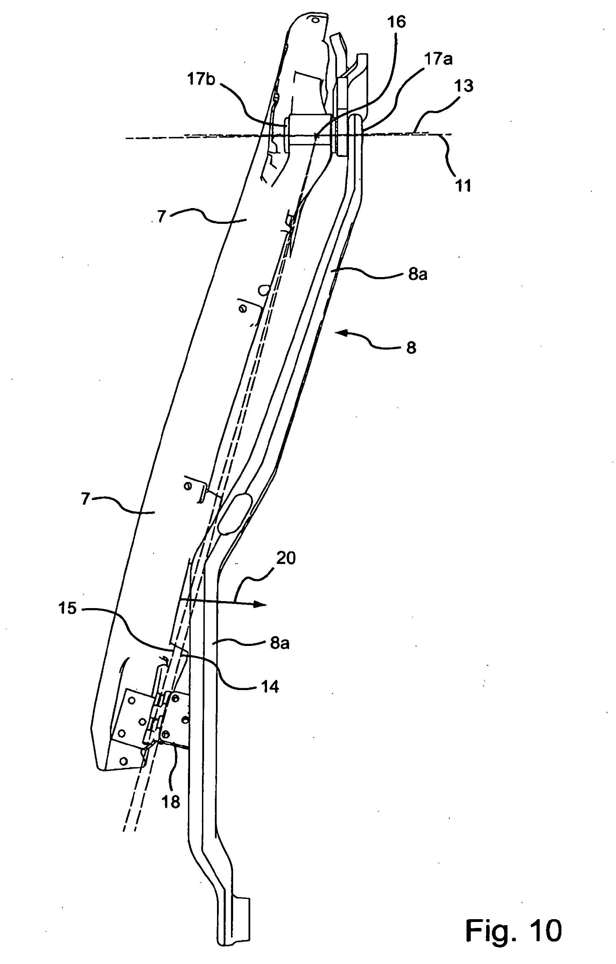

- Fig. 10: eine ähnliche Ansicht wie Fig. 9 während der gerade beginnenden Dachöffnung nach Fig. 4,

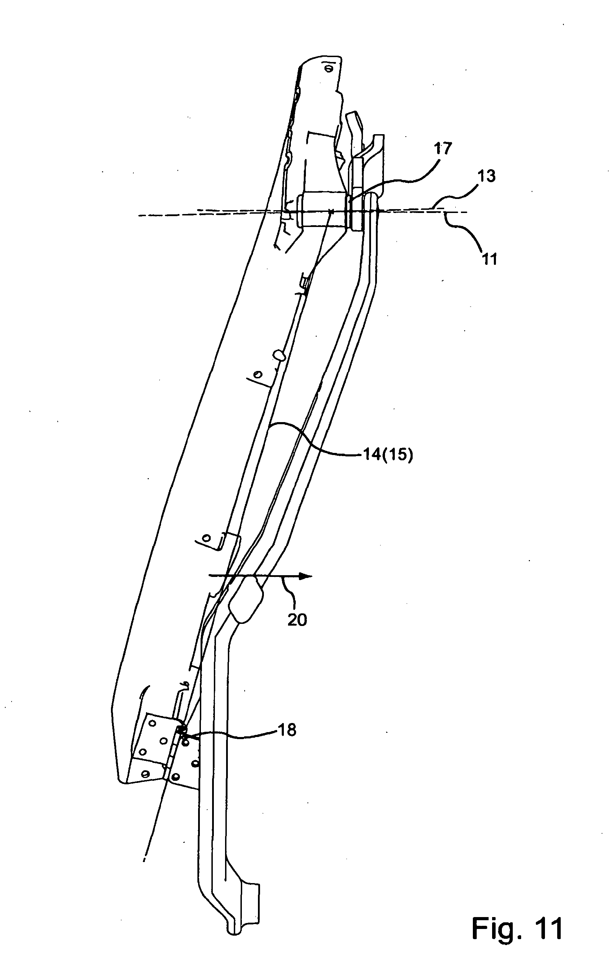

- Fig. 11: eine ähnliche Ansicht wie Fig. 10 während der weiter fortschreitenden Dachöffnung, etwa entsprechend der Dachstellung nach Fig. 5,

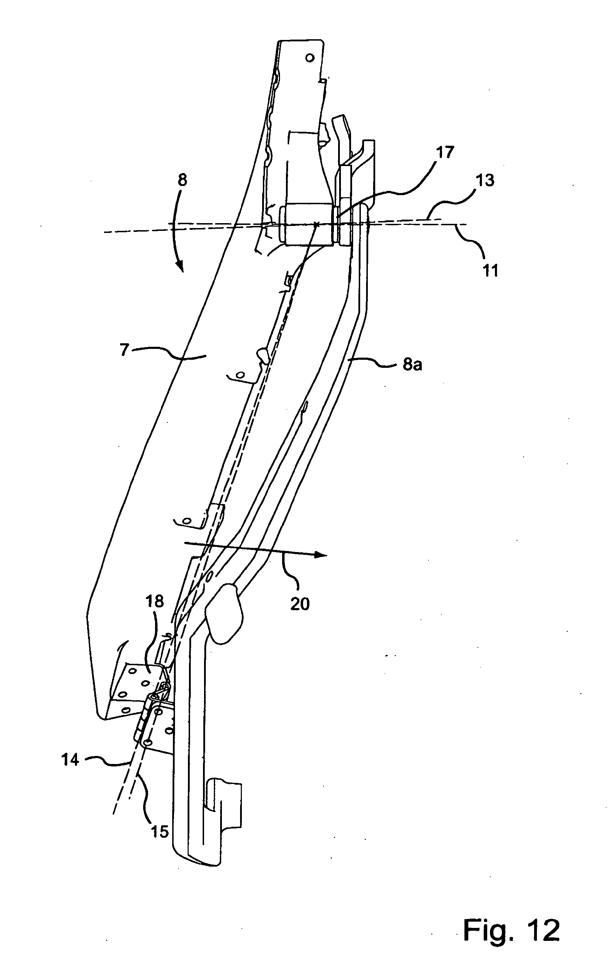

- Fig. 12: eine ähnliche Ansicht wie Fig. 11 während der weiter fortschreitenden Dachöffnung, etwa entsprechend der Dachstellung nach Fig. 6,

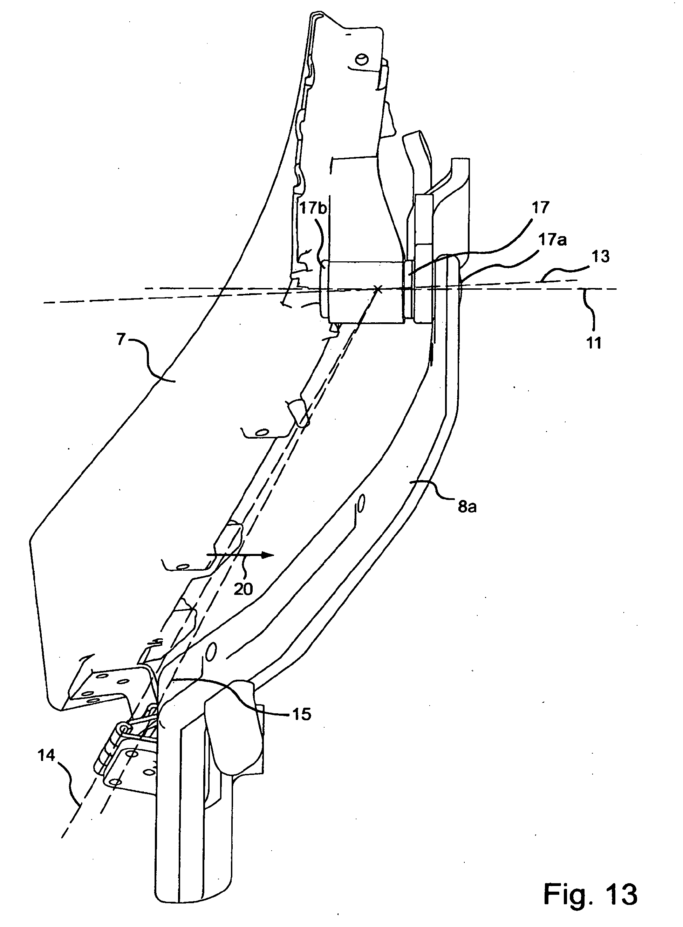

- Fig. 13: eine ähnliche Ansicht wie Fig. 12 während der weiter fortschreitenden Dachöffnung, etwa entsprechend der Dachstellung nach Fig. 7,
- Fig. 14: eine ähnliche Ansicht wie Fig. 13 bei vollständig abgelegtem Dach, entsprechend der Dachstellung nach Fig. 8,
- Fig. 15: eine Detailansicht eines oberen, in sich abgewinkelten Verbindungsbolzens mit zusätzlich eingezeichneten Achsen dieses Bolzens,

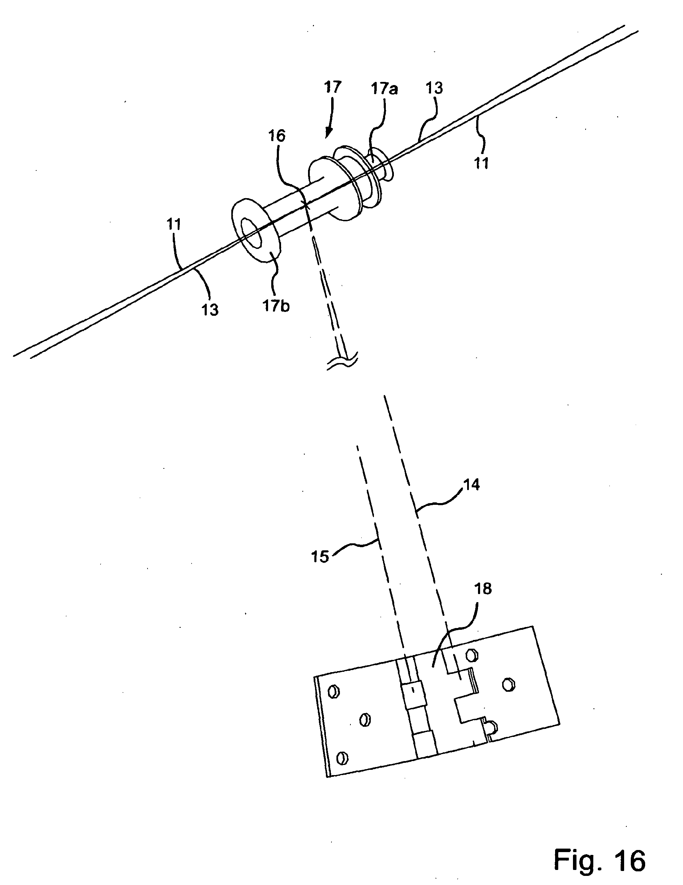

- Fig. 16: den Bolzen nach Fig. 15 mit zusätzlich - nicht maßstäblich - einem unteren Scharnier und dessen Drehachsen, die sich im Schnittpunkt der Achsen des Verbindungsbolzens treffen.

Ein erfindungsgemäße Cabriolet-Fahrzeug 1 kann entweder als mit zumindest einer Rückbank versehenes vier- oder mehrsitziges Fahrzeug oder als Zweisitzer ausgebildet sein.

Im gezeichneten Ausführungsbeispiel bildet das bewegliche und in geschlossener Stellung mittelbar oder unmittelbar an einen Windschutzscheibenrahmen (selbst nicht dargestellt) anschließende Dach 2 ein insgesamt mit einem durchgehenden Bezug überzogenes Soft-Top. Das Dach 2 kann manuell oder voll- oder teilautomatisch zu bewegen sein. Es ist zu seiner Öffnung im hinteren Fahrzeugbereich ablegbar. Hierzu ist eine Eintrittsöffnung in die Karosserie 3 vorgesehen, die bei Dachöffnung vom Dach 2 ganz oder teilweise durchlaufen wird. Im vorliegenden Ausführungsbeispiel ist das Dach 2 über eine sog. Z-Faltung in der Karosserie 3 ablegbar, wobei das im geschlossenen Zustand mit dem Windschutzscheibenrahmen verbundene vordere Dachende seine Orientierung im abgelegten Zustand beibehält, also auch in abgelegter Stellung mit der Außenseite nach oben weist. Dies ist jedoch nicht zwingend. Ein erfindungsgemäßes Cabriolet-Fahrzeug kann ohne hinteren Spannbügel und ohne einen Verdeckkastendeckel auskommen. Das Dach 2 kann zudem mit dem hinteren Rand seines Bezugs an der Karosserie 3 befestigt sein.

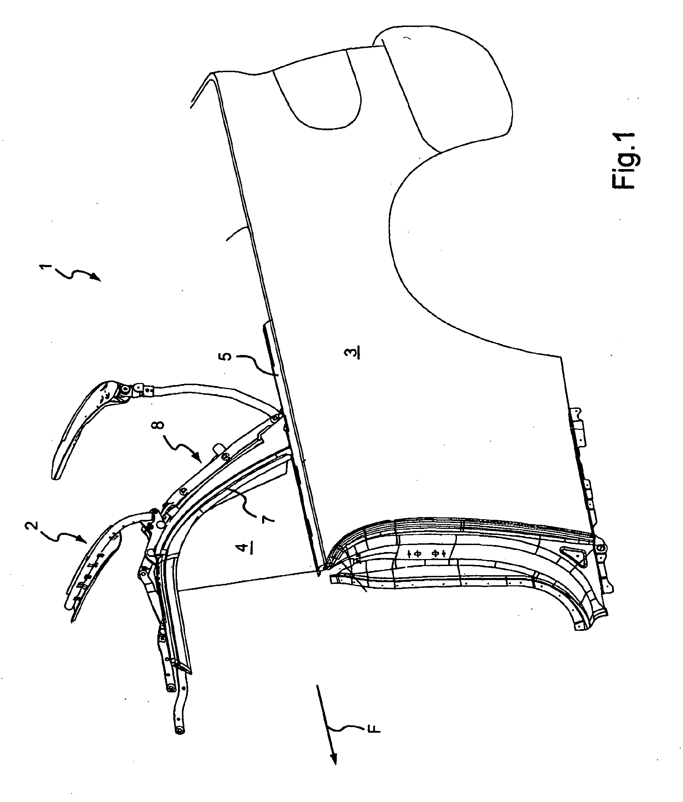

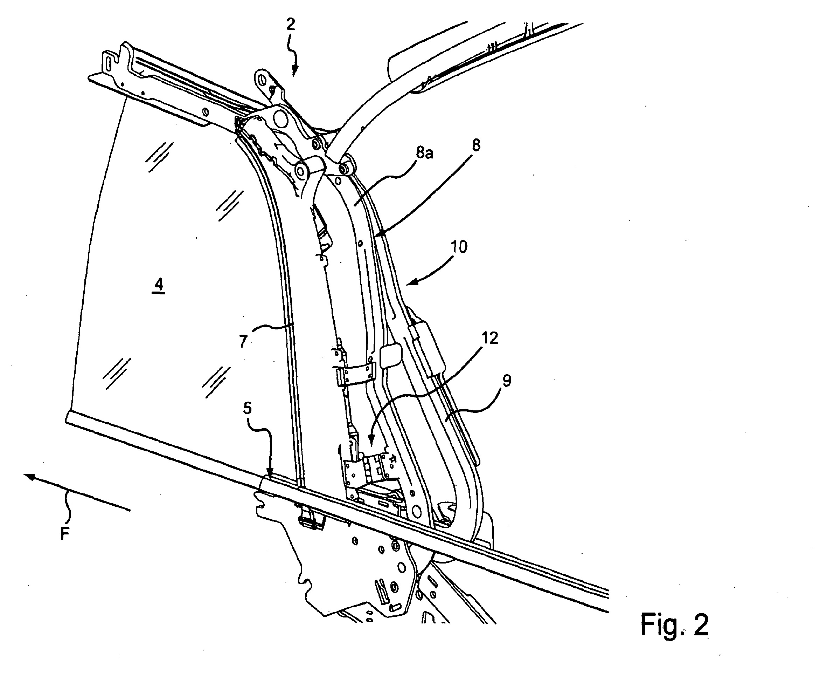

An jeder Fahrzeugseite (in Figur 1 ist ein Teil der bezüglich der Fahrtrichtung F linken Seite dargestellt) weist das Dach 2 einen im geschlossenen Zustand gegen eine Seitenscheibe 4 dichtenden und vom Bereich einer Fensterbrüstungslinie 5 aufragenden Säulenteil 7 auf. Dieser Säulenteil 7 ist Bestandteil einer mehrteiligen Hauptsäule 8. Diese ist zur Dachöffnung insgesamt heckwärts und abwärts verlagerbar, zum Beispiel schwenkbar. Die Hauptsäule 8 bildet üblicherweise einen Teil eines noch einen zweiten aufragenden Schwenklenker 9 umfassenden Schwenkparallelogramms - oder zumindest Viergelenks - für die Dachbewegung. Die Hauptsäule 8 kann bei geschlossenem Dach 2 (Fig. 1, Fig. 2) auf der Fensterbrüstungslinie 5 aufstehen oder etwas unterhalb von dieser enden. Die Fensterbrüstungslinie 5 kann in diesem Bereich eine Ausnehmung aufweisen, um das Öffnen des Daches 2 zu erleichtern und den erforderlichen Querverlagerungsweg zu minimieren.

Zumindest über einen Teil dieser Bewegung ist der Säulenteil 7 zusätzlich auch bereichsweise gegenüber einem in einer in Fahrzeuglängsrichtung liegenden Ebene verbleibenden Bereich der Hauptsäule 8 quer beweglich. Diese Querbewegung erfolgt bei Dachöffnung mit einer einwärts gerichteten Komponente, so dass sich im unteren Bereich der Säulenteile 7 die Dachbreite während der Öffnung verkleinert.

Für diese Verlagerung in Fahrzeugquerrichtung und die dafür erforderliche Krafteinleitung ist erfindungsgemäß keine der Karosserie zugeordnete Führungshilfe erforderlich.

Für die in einer vertikalen Fahrzeuglängsebene erfolgende Heckwärts- und Abwärtsverlagerung der Hauptsäule 8 bei der Dachöffnung ist am Fahrzeug 1 ein erstes Mehrgelenk 10 - hier als Viergelenk - vorgesehen. Dieses umfasst zwei karosserieseitige Schwenkgelenke im unteren Bereich der Hauptsäule 8, die an der Karosserie 3 im Bereich der Fensterbrüstungslinie 5 angebunden sind, und zwei dachseitige Schwenkgelenke im oberen Bereich der Hauptsäule 8, die bei geschlossenem Dach im Übergangsbereich zwischen einem schräg abwärts verlaufenden, ein Heckfenster umfassenden hinteren Dachteil und einem nahezu horizontal über einem Insassenraum liegenden vorgeordneten Dachteil liegen. Die Lenker 8 und 9 bilden damit ein parallelogrammartiges Viergelenk. Die Achsen der genannten vier Schwenkgelenke stehen parallel zueinander. In Fig. 2 ist eine obere Achse 11 des dachseitigen Schwenkgelenks der Hauptsäule 8 eingezeichnet.

Für eine zusätzliche, diese Heck- und Abwärtsbewegung überlagernde Quereinwärtsverlagerung zumindest des unteren Endes des Säulenteils 7 über einen Teil der Dachöffnungsbewegung ist hingegen eine zweite und mit dem Dach 2 bei seinem Öffnen und Schließen mitbewegliche räumliche Gelenkanordnung 12 vorgesehen.

Über diese ist die Querbewegung des Bereichs des Säulenteils 7 während der Dachöffnungs- oder -schließbewegung zwangsweise bewirkbar, ohne dass eine eigene Steuerungskulisse, Antriebe oder ähnliche Maßnahmen hierfür erforderlich wären.

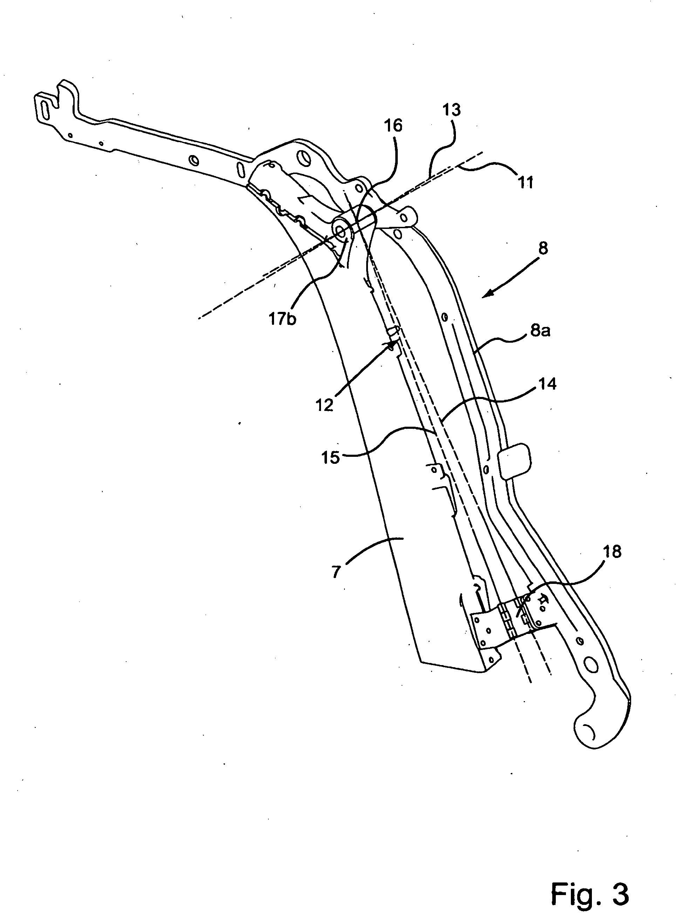

Die räumliche Gelenkanordnung 12 bildet hier ein sphärisches Gelenk aus, d. h., dass dessen sämtliche Achsen 13, 14, 15 (eingezeichnet in Fig. 3) sich in genau einem Schnittpunkt 16 schneiden. Dieser Schnittpunkt 16 liegt hier auf einer der Gelenkachsen des ersten Mehrgelenks 10, nämlich einer in Fig. 3 ebenfalls eingezeichneten oberen Schwenkachse 11.

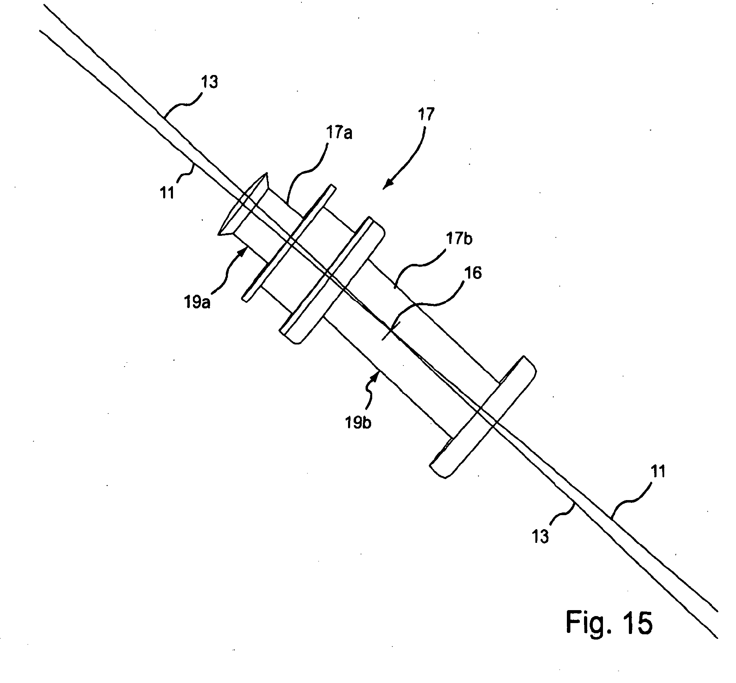

Die erste, bei geschlossenem Dach 2 obere Achse 13 der räumlichen Gelenkanordnung 12 ist hier in konstruktiv einfacher und zuverlässiger Weise als zentrale Achse eines Abschnitts 17b eines in sich abgewinkelten Verbindungsbolzens 17 ausgebildet. Dieser verbindet den nur in einer vertikalen Längsebene des Fahrzeugs 1 beweglichen Lenker 8a der Hauptsäule 8 mit dem quer beweglichen Säulenteil 7. Der Verbindungsbolzen wird in einem ersten Teilabschnitt 17a seines Verlaufs zentral von der quer zum Fahrzeug 1 erstreckten Achse 11 des Mehrgelenks 10 durchlaufen und daher in diesem Teil in der vertikalen Fahrzeuglängsebene verschwenkt. Ein zweiter Teilabschnitt 17b steht hingegen leicht abgewinkelt hierzu; in diesem Teilabschnitt 17b wird der Verbindungsbolzen zentral von der Achse 13 der räumlichen Gelenkanordnung 12 durchlaufen (Fig. 15). Die Abwinklung zwischen den Achsen 11 und 13 - und somit zwischen den beiden Teilabschnitten 17a, 17b des hier einstückigen Verbindungsbolzens 17 - ist gering und liegt typisch unter 3°, um damit trotz des großen Schwenkwegs des oberen Endes der Hauptsäule 8 nach hinten und unten nur einen kleinen Verlagerungsweg des Säulenteils 7 in Fahrzeugquerrichtung zu erzeugen. Der Verlagerungsweg in Fahrzeugquerrichtung beträgt typisch nur wenige Millimeter, der Weg des oberen Verbindungsbolzens 17 auf einer Kreisbogenbahn nach hinten und abwärts hingegen einige zehn Zentimeter.

Ein Anschlag 21 zur Begrenzung der Bewegbarkeit (Überziehen) durch die Bezugspannung bei geschlossenem Dach 2 kann zusätzlich vorgesehen sein und ist in Fig. 2 mit eingezeichnet.

Der in Fig. 15 im Detail herausgezeichnete Verbindungsbolzen umfasst eine erste umlaufende Außenfläche 19a als Schwenklager für einen in Fahrzeugquerrichtung nicht verlagerbaren Lenker (hier den Lenker 8a der Hauptsäule 8) des Mehrgelenks 10 und eine hierzu abgewinkelt stehende zweite Außenfläche 19b als Schwenklager für den quer einwärts verlagerbaren Säulenteil 7.

Allein durch die Schwenkbewegung des Lenkers 8a des Mehrgelenks 10 in einer vertikalen Fahrzeuglängsebene ist somit automatisch und zwangsweise die Querverlagerung des Säulenteils 7 bewirkbar. Eine Fehlbedienung ist ausgeschlossen.

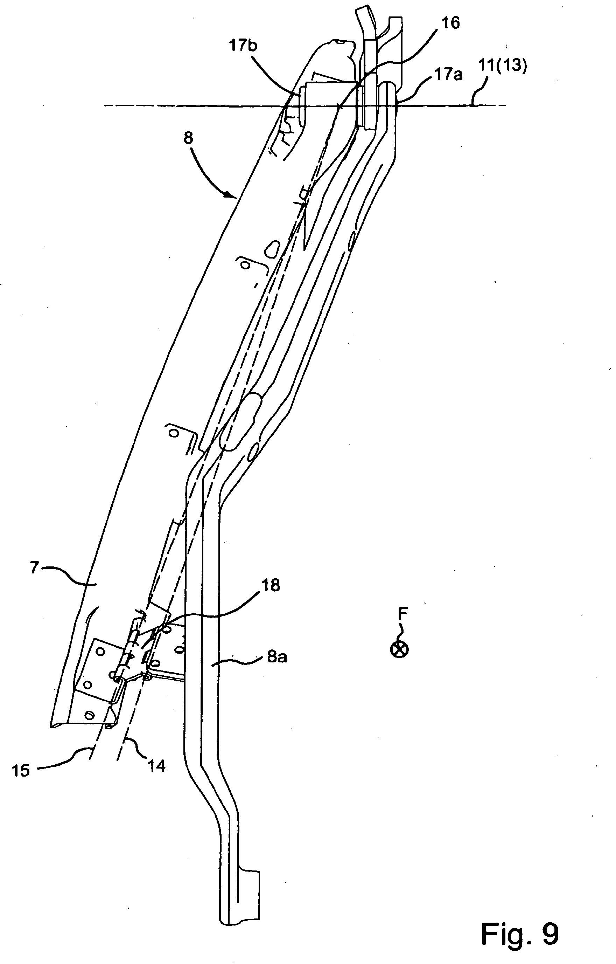

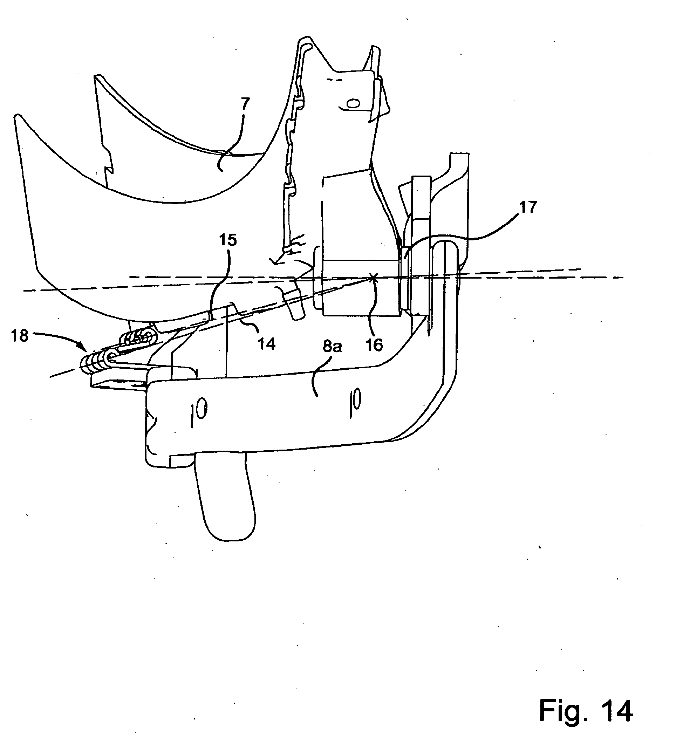

Die räumliche Gelenkanordnung 12 umfasst für eine definierte Bewegung des Säulenteils 7 im unteren, der Fensterbrüstung 5 zugewandten Bereich des Säulenteils 7 ein Scharnier 18. Dieses verbindet den in Querrichtung nicht beweglichen Teil 8a der Hauptsäule 8 mit dem quer einwärts beweglichen Säulenteil 7. Es ist beweglich um zwei ungefähr axial zum Verlauf des Säulenteils 7, jedoch zueinander nicht parallele Achsen 14, 15. Diese verlaufen in jeder Phase der Bewegung derart, dass sie sich im Schnittpunkt 16 auf der oberen Schwenkachse 11 des ersten Mehrgelenks 10 vereinen (sh. z. B. Fig. 3). Bei der Bewegung des Verbindungsbolzens 17 nach hinten und abwärts wird über die Achsen 14 und 15 ein Einklappen des Mittelteils des Scharniers 18 um die Achse 14 bewirkt, wodurch sich die Verschmälerung ergibt (Abfolge von Fig. 9 zu Fig. 14), gleichzeitig kann der an dem äußeren Säulenteil befestigte Abschnitt des Scharniers um die zweite Achse 15 schwenken, so dass der Säulenteil bei der Quereinwärtsverlagerung seine Orientierung beibehält.

Insgesamt ist durch das erste, ebene Mehrgelenk 10 mit hier vier zueinander parallelen Gelenkachsen und die räumliche Gelenkanordnung 12 mit hier drei einander schneidenden Achsen 13, 14, 15 ein Siebengelenk gebildet. Dieses läuft ohne eine Über- oder Unterbestimmung und aufgrund der sphärischen Ausbildung auch zwangsweise verkantungsfrei bei jedem Dachöffnen oder -schließen mit gleichen Wegen.

Eine Ausrichtung oder ein Toleranzausgleich für die Querbewegung ist daher entbehrlich. Das Dach 2 kann als funktionsfähige Einheit unabhängig von der Verbindung mit der Karosserie alle Bewegungen seiner Teile durchlaufen und somit vor seinem Einbau in den Rohbau auf Funktion getestet werden; der Einbau kann dann am Band ohne Zeitaufwendung für einen Toleranzausgleich erfolgen, was die Montagezeit weiter verkürzt.

In jedem Fall ist es auch entbehrlich, ein Sortiment mit unterschiedlichen Zuggliedern für die Querverlagerung bereitstellen zu müssen. Die Montage ist dadurch schnell möglich. Bei Einsetzen des Dachmoduls in den Rohbau sind keinerlei Ausrichtungsarbeiten mehr erforderlich.

## Patentansprüche

1. Ablegbares Dach (2) eines Cabriolet-Fahrzeugs (1), das an jeder Fahrzeugseite einen im geschlossenen Zustand gegen eine Seitenscheibe (4) des Cabriolet-Fahrzeugs (1) dichtenden und vom Bereich einer Fensterbrüstungslinie (5) einer Karosserie (3) aufragenden Säulenteil (7) umfasst, der zur Dachöffnung über ein erstes Mehrgelenk (10) mit zueinander parallelen Achsen (11) insgesamt heckwärts und abwärts verlagerbar ist und dabei zumindest über einen Teil der Dachöffnungsbewegung bereichsweise eine überlagerte Bewegung mit einer Komponente (20) in Fahrzeugquerrichtung ausführt, wobei zur Bewirkung der Querbewegung des verlagerbaren Bereichs des Säulenteils (7) eine mit dem Dach (2) bei seinem Öffnen und Schließen mitbewegliche räumliche Gelenkanordnung (12) vorgesehen ist,
**dadurch gekennzeichnet,**
**dass** die räumliche Gelenkanordnung (12) ein sphärisches Gelenk ausbildet, dessen sämtliche Achsen (13;14;15) sich in genau einem Schnittpunkt (16) schneiden, wobei der Schnittpunkt (16) der Achsen (13;14;15) der räumlichen Gelenkanordnung (12) auf einer der Gelenkachsen (11) des ersten Mehrgelenks (10) gelegen ist, und wobei das erste Mehrgelenk (10) zumindest zwei bei geschlossenem Dach (2) im Übergangsbereich zwischen einem schräg abwärts verlaufenden, ein Heckfenster umfassenden hinteren Dachteil und einem nahezu horizontal über einem Insassenraum liegenden vorgeordneten Dachteil liegende obere Gelenkachsen umfasst und der Schnittpunkt (16) der räumlichen Gelenkanordnung (12) auf einer dieser oberen Gelenkachsen (11) gelegen ist, wobei die räumliche Gelenkanordnung (12) eine erste Achse (13) umfasst, die gegenüber der oberen Gelenkachse (11) des ebenen Mehrgelenks (10), auf der der Schnittpunkt (16) der Achsen (11;13) liegt, mit einer geringen Abwinklung verläuft und durch den Schnittpunkt (16) eine zweite und eine dritte Achse (14;15) der räumlichen Gelenkanordnung (12) laufen, die im Wesentlichen dem Verlauf des Säulenteils (7) folgen, wobei die zweite und dritte Achse (14;15) zu einem unteren Scharnier (18) führen, das einen in Querrichtung nicht beweglichen Teil (8a) der Hauptsäule (8) mit dem quer einwärts beweglichen Säulenteil (7) verbindet.

2. Ablegbares Dach nach Anspruch 1,
**dadurch gekennzeichnet,**
**dass** die Krafteinleitung zur Bewirkung der Bewegungskomponente in Fahrzeugquerrichtung ohne der Karosserie (3) zugeordnete Führungshilfen ermöglicht ist.

3. Ablegbares Dach nach einem der Ansprüche 1 oder 2,
**dadurch gekennzeichnet,**
**dass** die Querbewegung des Bereichs des Säulenteils (7) während der Dachöffnungs- oder -schließbewegung zwangsweise bewirkbar ist.

4. Ablegbares Dach nach einem der Ansprüche 1 bis 3,
**dadurch gekennzeichnet,**
**dass** das erste Mehrgelenk (10) ein Viergelenk mit zwei oberen, bei geschlossenem Dach (2) im Übergangsbereich zwischen einem schräg abwärts verlaufenden, ein Heckfenster umfassenden hinteren Dachteil und einem nahezu horizontal über einem Insassenraum liegenden vorgeordneten Dachteil und mit zwei unteren Gelenken im Bereich einer Fensterbrüstungslinie (5) ist.

5. Ablegbares Dach nach einem der Ansprüche 1 bis 4,
**dadurch gekennzeichnet,**
**dass** die Abwinklung weniger als 3° beträgt.

6. Ablegbares Dach nach einem der Ansprüche 1 bis 5,
**dadurch gekennzeichnet,**
**dass** die erste Achse (13) der räumlichen Gelenkanordnung (12) und diejenige obere Gelenkachse (11) des Mehrgelenks (10), auf der der Schnittpunkt (16) der Achsen (11;13;14;15) liegt, bereichsweise von einem in sich abgewinkelten Verbindungsbolzen (17) umfasst sind.

7. Ablegbares Dach nach Anspruch 6,
**dadurch gekennzeichnet,**
**dass** der abgewinkelte Verbindungsbolzen (17) eine erste umlaufende Außenfläche (19a) als Schwenklager für einen in Fahrzeugquerrichtung nicht verlagerbaren Lenker (8a) des ersten Mehrgelenks (10) und eine hierzu abgewinkelt stehende zweite Außenfläche (19b) als Schwenklager für den quer einwärts verlagerbaren Säulenteil (7) umfasst und durch die Schwenkbewegung des Lenkers (8a) des Mehrgelenks (10) in einer Fahrzeuglängsebene automatisch die Querverlagerung des Säulenteils (7) bewirkbar ist.

8. Ablegbares Dach nach einem der Ansprüche 1 bis 7,
**dadurch gekennzeichnet,**
**dass** das Scharnier (18) zwei zueinander nicht parallele Achsen (14;15) umfasst.

9. Ablegbares Dach nach einem der Ansprüche 1 bis 8,
**dadurch gekennzeichnet,**
**dass** das erste Mehrgelenk (10) mit zueinander parallelen Gelenkachsen (11) und die räumliche Gelenkanordnung (12) mit einander schneidenden Achsen (13;14;15) insgesamt ein Siebengelenk bilden.

10. Cabriolet-Fahrzeug (1) mit einem Fahrzeugdach (2) nach einem der Ansprüche 1 bis 9.

## Claims

1. A stowable roof (2) of a convertible vehicle (1), said roof comprising, on either side of the vehicle, a column part (7) which seals a side window (4) of the convertible vehicle (1) in the closed state and protrudes upwards from the area of a window sill line (5) of a vehicle body (3), said column part (7) being movable in order to open the roof, via a first multiple joint (10) with parallel axes (11), in a generally rearward and downward direction and, in doing so, performing a partially overlapping movement with a component (20) in the transverse direction of the vehicle at least over a part of the roof opening movement, wherein a spatial joint assembly (12) is provided in order to effect said transverse movement of the movable area of the column part (7), said spatial joint assembly (12) being movable along with the roof (2) during the opening and closing of the latter,
**characterised in that**
the spatial joint assembly (12) forms a spherical joint whose axes (13;14;15) all intersect in exactly one point of intersection (16), wherein the point of intersection (16) of the axes (13;14;15) of the spatial joint assembly (12) is located on one of the joint axes (11) of the first multiple joint (10), and wherein the first multiple joint (10) comprises at least two upper joint axes which, when the roof (2) is closed, are located in the transition area between a rear roof part, which extends obliquely downwards and comprises a rear window, and a forward roof part, which is arranged nearly horizontally above an occupant space, and the point of intersection (16) of the spatial joint assembly (12) is located on one of said upper joint axes (11), wherein said spatial joint assembly (12) comprises a first axis (13) which has a small bending angle with respect to the upper joint axis (11) of the planar multiple joint (10), on which the point of intersection (16) of the axes (11; 13) is located, and second and third axes (14; 15) of the spatial joint assembly (12) extend through the point of intersection (16), said second and third axes (14;15) substantially following the course of the column part (7), with said second and third axes (14;15) leading to a lower hinge (18) that connects a part (8a) of the main column (8), which is not movable in a transverse direction, to the column part (7), which is movable transversely inwards.

2. The stowable roof according to claim 1, **characterised in that** the introduction of a force causing the motion component in the transverse direction of the vehicle is enabled without guides assigned to the vehicle body (3).

3. The stowable roof according to any one of claims 1 or 2, **characterised in that** the transverse movement of the area of the column part (7) can be enforced during the roof opening or closing movement.

4. The stowable roof according to any one of claims 1 to 3, **characterised in that** the first multiple joint (10) is a four-bar linkage comprising two upper joints which, when the roof (2) is closed, are located in the transition area between a rear roof part, which extends obliquely downwards and comprises a rear window, and a forward roof part, which is arranged nearly horizontally above an occupant space, and further comprising two lower joints in the region of a window sill line (5).

5. The stowable roof according to any one of claims 1 to 4, **characterised in that** the bending angle is less than 3°.

6. The stowable roof according to any one of claims 1 to 5, **characterised in that** the first axis (13) of the spatial joint assembly (12) and the upper joint axis (11) of the multiple joint (10) on which the point of intersection (16) of the axes (11; 13; 14; 15) is located are partially encircled by a connecting bolt (17) which is bent itself.

7. The stowable roof according to claim 6, **characterised in that** the bent connecting bolt (17) comprises a first circumferential outer surface (19a) as a pivot bearing for a link (8a) of the first multiple joint (10), said link (8a) not being displaceable in the transverse direction of the vehicle, and a second outer surface (19b), extending at an angle to said first outer surface (19a), as a pivot bearing for the transversely inwardly displaceable column part (7), and **in that** the transverse displacement of the column part (7) can be effected automatically by the pivoting movement of the link (8a) of the multiple joint (10) in a longitudinal plane of the vehicle.

8. The stowable roof according to any one of claims 1 to 7, **characterised in that** the hinge (18) comprises two axes (14; 15) that are not parallel to each other.

9. The stowable roof according to any one of claims 1 to 8, **characterised in that** the first multiple joint (10) with parallel joint axes (11) and the spatial joint assembly (12) with intersecting axes (13; 14; 15) together form a seven-bar linkage.

10. A convertible vehicle (1) comprising a vehicle roof (2) according to any one of claims 1 to 9.

## Revendications

1. Toit escamotable (2) d'un véhicule cabriolet (1), ledit toit comportant, de chaque côté dudit véhicule, une partie de montant (7) qui étanche une vitre latérale (4) dudit véhicule cabriolet (1) en état fermé et s'étend vers le haut à partir d'une ligne de caisse (5) d'une carrosserie (3), ladite partie de montant (7) étant déplaçable, généralement vers l'arrière et vers le bas, pour l'ouverture du toit par un premier ensemble à plusieurs articulations (10) avec des axes parallèles (11) et exécutant ainsi un mouvement à chevauchement partiel avec un composant (20) en direction transversale du véhicule sur au moins une partie du mouvement d'ouverture dudit toit, dans lequel on prévoit un ensemble articulé spatial (12) afin d'effectuer ledit mouvement transversal de la déplaçable de la partie de montant (7), ledit ensemble articulé spatial (12) étant déplaçable avec le toit (2) pendant l'ouverture et fermeture de ce dernier,
**caractérisé en ce que**
ledit ensemble articulé spatial (12) constitue une articulation sphérique dont tous les axes (13;14;15) se croisent dans un seul point d'intersection (16), ledit point d'intersection (16) des axes (13;14;15) de l'ensemble articulé spatial (12) étant situé sur l'un des axes d'articulation (11) du premier ensemble à plusieurs articulations (10), et le premier ensemble à plusieurs articulations (10) comportant au moins deux axes d'articulation supérieurs qui se trouvent, lorsque le toit (2) est fermé, dans la région de passage entre une partie de toit arrière, qui est inclinée vers le bas et comporte une lunette arrière, et une partie de toit avant disposée presque horizontalement au-dessus d'un habitacle, et le point d'intersection (16) de l'ensemble articulé spatial (12) étant disposé sur l'un desdits axes d'articulation supérieurs (11), ledit ensemble articulé spatial (12) comportant un premier axe (13) qui s'étend à un angle faible par rapport à l'axe d'articulation supérieur (11) de l'ensemble à plusieurs articulations (10) planaire, sur lequel se trouve le point d'intersection (16) des axes (11;13), et une deuxième et une troisième axe (14;15) de l'ensemble articulé spatial (12) s'étendant à travers le point d'intersection (16), la deuxième et troisième axe (14; 15) suivant sensiblement le tracé de la partie de montant (7), et la deuxième et troisième axe (14;15) menant vers une charnière inférieure (18) reliant une partie (8a) du montant principal (8) qui n'est pas déplaçable en direction transversale avec la partie de montant (7) qui est déplaçable en direction transversale vers l'intérieur.

2. Toit escamotable selon la revendication 1, **caractérisé en ce que** l'introduction d'une force qui entraîne le composant de mouvement en direction transversale dudit véhicule est possible sans des guidages associés avec la carrosserie (3).

3. Toit escamotable selon l'une quelconque des revendications 1 ou 2, **caractérisé en ce que** le mouvement transversal de ladite région de la partie de montant (7) peut s'effectuer automatiquement lors du mouvement d'ouverture ou de fermeture du toit.

4. Toit escamotable selon l'une quelconque des revendications 1 à 3, **caractérisé en ce que** le premier ensemble à plusieurs articulations (10) est un ensemble à quatre articulations comportant deux articulations supérieures qui sont disposées, lorsque le toit (2) est fermé, dans la région de passage entre une partie de toit arrière, qui est inclinée vers le bas et comporte une lunette arrière, et une partie de toit avant disposé presque horizontalement au-dessus d'un habitacle, et comportant en outre deux articulations inférieures dans la région d'une ligne de caisse (5).

5. Toit escamotable selon l'une quelconque des revendications 1 à 4, **caractérisé en ce que** l'angle est de moins de 3°.

6. Toit escamotable selon l'une quelconque des revendications 1 à 5, **caractérisé en ce que** le premier axe (13) de l'ensemble articulé spatial (12) et l'axe d'articulation supérieur (11) de l'ensemble à plusieurs articulations (10) sur lequel est disposé le point d'intersection (16) des axes (11;13;14;15) sont partiellement entourés par un boulon de liaison (17) coudé en soi-même.

7. Toit escamotable selon la revendication 6, **caractérisé en ce que** le boulon de liaison (17) coudé comporte une première surface extérieure (19a) circonférentielle constituant un palier de pivotement pour une articulation (8a) du premier ensemble à plusieurs articulations (10), ladite articulation (8a) n'étant pas déplaçable en direction transversale du véhicule, et une deuxième surface extérieure (19b) s'étendant à un angle par rapport à la première surface extérieure (19a) et constituant un palier de pivotement pour la partie de montant (7) déplaçable transversalement vers l'intérieur, et **en ce que** le déplacement transversal de ladite partie de montant (7) peut s'effectuer automatiquement par pivotement de l'articulation (8a) de l'ensemble à plusieurs articulations (10) dans un plan longitudinal du véhicule.

8. Toit escamotable selon l'une quelconque des revendications 1 à 7, **caractérisé en ce que** la charnière (18) comporte deux axes (14; 15) qui ne sont pas parallèles l'un à l'autre.

9. Toit escamotable selon l'une quelconque des revendications 1 à 8, **caractérisé en ce que** le premier ensemble à plusieurs articulations (10) présentant des axes d'articulation (11) parallèles et l'ensemble articulé spatial (12) présentant des axes (13; 14; 15) croisés constituent en somme un ensemble à sept articulations.

10. Véhicule cabriolet (1) comportant un toit de véhicule (2) selon l'une quelconque des revendications 1 à 9.
